# EUROPEAN PATENT APPLICATION

(11) **EP 2 397 669 A2**
(43) Date of publication of application: **21.12.2011**
(21) Application number: 11004850.1
(22) Date of filing: 14.06.2011
(51) Int. Cl.: F02C 1/04, F02C 6/16, F02C 6/18

(54) **Method and system for periodic cooling, storing and heating with multiple regenerators**

(30) Priority: 17.06.2010 US 817664
(71) Applicant: Air Products and Chemicals, Inc., Allentown, PA 18195-1501 (US)
(72) Inventor: Xu, Jianguo, 18940 Wrightstown PA (US); Higginbotham, Paul, Guildford 3QG Surrey (GB); Vero, Robert, 18049 Emmaus PA (US); Amy, Fabrice, 18062 Macungie PA (US)
(74) Representative: Kador & Partner

(57) **Abstract**

Disclosed are a method and system involving pressurizing an atmospheric gas stream to form at least a compressed atmospheric gas stream, directing the compressed atmospheric gas stream to a first regenerator for cooling, pressurizing to above a second predetermined pressure to form at least a supercritical atmospheric gas stream, directing the supercritical atmospheric gas stream to a second regenerator for cooling, reducing pressure to form at least a liquefied atmospheric gas stream, selectively storing the liquefied atmospheric gas stream, pressurizing the liquefied atmospheric gas stream to form at least a pressurized liquefied atmospheric gas stream, heating the pressurized liquefied atmospheric gas stream in the second regenerator to form at least a heated stream, expanding the heated stream to form at least a medium pressure atmospheric gas stream, directing the medium pressure atmospheric gas stream to the first regenerator, and heating the medium pressure atmospheric gas stream in the first regenerator.

## Description

### FIELD OF THE INVENTION

The present invention is directed to a method and system for periodic cooling, storing, and heating of atmospheric gas. More specifically, the present invention is directed to a method and system involving multiple regenerators in a regeneration cycle for atmospheric gas.

### BACKGROUND OF THE INVENTION

Known systems can cool pressurized air obtained during off-peak electricity demand hours (off-peak hours) and vaporize the pressurized air under pressure during peak electricity demand hours (peak hours).

Japanese Patent Application, JP4-132837A, which is hereby incorporated by reference in its entirety, describes a gas turbine power generation facility comprising a gas turbine for driving a power generator, a liquefaction facility for liquefying air, a storage container for storing liquefied fluid, and a vaporization facility for vaporizing the liquefied fluid and feeding the product to a gas turbine burner. When the liquefied fluid is pumped from the storage container, it is vaporized and directed to the gas turbine burner. This facility suffers from several drawbacks. For example, liquefaction of air is carried out by using a dedicated liquefier, which can be inefficient. In addition, the vaporization of the liquefied fluid and transferring of the refrigeration can be inefficient based upon including multiple heat transfer steps.

Japanese Patent Application, JP4-127850, which is hereby incorporated by reference in its entirety, describes a liquid air storage electricity generation system that cools, liquefies, and stores air under normal pressure. The liquid air is warmed and high-pressure air is extracted as required. The high-pressure air is used to drive an electricity-generating turbine and generate electricity. This system suffers from several drawbacks. For example, although use of refrigeration in liquefied natural gas vaporization can reduce energy needs for air liquefaction, liquefied natural gas is not always available. In addition, as a combustible gas, liquefied natural gas involves safety concerns for storage and transport, and more importantly, the heat exchanger of liquefied natural gas, a combustible material, with an oxidizing gas (for example, air).

Japanese Patent Application, JP4-191419, which is hereby incorporated by reference in its entirety, describes methods used to supply air at a constant specified pressure to a combustion temperature. In a high-loss method, pressure is increased to a pressure substantially higher than a specified pressure, and the pressure is reduced to a constant pressure during use. In a high-risk method, pressure is raised to a specified level using a separate water head created by sea water, river water, lake water, or the like. In the methods of the JP4-191419 patent, air is liquefied and is reduced in volume as compared with the volume existing at the atmospheric pressure. The liquid is vaporized and refrigeration is stored. The stored refrigeration can be used for the precooling of air aspirated by the air liquefied to reduce the consumption of motive power by the compressor and to reduce the rate at which electric power is consumed in the production of liquid air. This method suffers from the drawback that it does not provide an efficient process for liquefying air and vaporizing the stored liquid air.

Hitachi (Hidefumi Araki, Mitsugu Nakabaru, and Kooichi Chino, Heat Transfer-Asian Research, 31 (4), 2002), which is hereby incorporated by reference in its entirety, describes high pressure air being sent to a combustor of a gas turbine during peak hours. Such a cycle involves a precooled regenerator. Precooling may be achieved by vaporization of liquefied natural gas. In some areas, liquefied natural gas may be unavailable. In addition, as a combustible gas, liquefied natural gas involves safety concerns for storage and transport, and more importantly, the heat exchangers of liquefied natural gas, a combustible material, with an oxidizing gas (for example, air). Additionally, Hitachi discusses extended cooling by including a regeneration medium such as pebbles or concrete. As such, operation of the precooled regenerator, as disclosed in Hitachi, can result in the regenerator warming up over cycles due to heat leak, heat introduced by machinery such as liquid air pumps, and the heat transfer temperature difference needed for heat transfer to take place in the regenerator and other heat exchangers if the pressure of the air being cooled is the same as or similar to that of the air being heated, so such a process is not sustainable. If the pressure of the air to be heated is much lower than that of the air being cooled, the process becomes rather inefficient.

When there is no external heat, or not enough external heat, a liquid air storage system with isothermal compression cannot generate the maximum amount of electricity during peak hours. Besides, adiabatic compressors are sometimes a less expensive option for air compression if the energy in the form of higher air temperature can be efficiently recovered. Since the liquid air storage system performs best when the air for storage is compressed to a pressure that is higher than the supercritical pressure of air, a lot of air compression is involved. Using adiabatic compressors can reduce the capital cost of the compressor significantly. However, the power needed for compression is also increased significantly (the energy input into the air is converted into the thermal energy contained in the higher temperature of the air). A method for efficiently recovering the thermal energy of the compressed air is desirable in order to make the process using adiabatic compressors cost effective. On the other hand, when the liquid air storage system is used at a site with no external heat or not enough external heat, if the air coming out of the regenerator is not at a very high temperature, the exhaust air from the air expander can be significantly below ambient temperature if this exhaust air exits the air expander at close to atmospheric pressure. That means the expander cannot extract as much energy as it can when the exhaust air from the air expander is at or close to, or somewhat higher than ambient temperature. If the refrigeration in the exhaust air cannot be efficiently used, such a process is sub-optimal. Keeping the exhaust air from such a high pressure ratio expander at or above ambient temperature would require the air to be compressed to a temperature that will make the air compressor prohibitively expensive if not infeasible with the prior art processes. An improved system and process are needed for such situations.

### SUMMARY OF THE INVENTION

One aspect of the present disclosure includes a regeneration process for periodic cooling, storing, and heating. The process includes pressurizing an atmospheric gas stream to above a predetermined pressure to form at least a compressed atmospheric gas stream (the predetermined pressure being about 2 bara), directing the compressed atmospheric gas stream to a first regenerator for cooling to form at least a first cooled stream, directing the first cooled stream from the first regenerator, pressurizing the first cooled stream to above a second predetermined pressure to form at least a supercritical atmospheric gas stream (the second predetermined pressure being about the critical pressure of the first cooled stream), directing the supercritical atmospheric gas stream to a second regenerator to form at least a second cooled stream, directing the second cooled stream from the second regenerator, reducing the pressure of the second cooled stream to form at least a liquefied atmospheric gas stream, selectively storing the liquefied atmospheric gas stream as a stored liquefied atmospheric gas, pressurizing at least a portion of the stored liquefied atmospheric gas to above a third predetermined pressure to form at least a pressurized liquefied atmospheric gas stream (the third predetermined pressure being about the critical pressure of the stored liquefied atmospheric gas), heating the pressurized liquefied atmospheric gas stream in the second regenerator to form at least a heated stream, directing the heated stream from the second regenerator, expanding the heated stream to form at least a medium pressure atmospheric gas stream, directing the medium pressure atmospheric gas stream to the first regenerator, and heating the medium pressure atmospheric gas stream in the first regenerator.

Another aspect of the present disclosure includes a regeneration system. The regeneration system includes a first compressor for pressurizing an atmospheric gas stream to above a predetermined pressure to form at least a compressed atmospheric gas stream (the predetermined pressure being about 2 bara), a first regenerator configured for cooling the compressed atmospheric gas stream to form at least a first cooled stream, a second compressor configured for pressurizing the first cooled stream to above a second predetermined pressure to form at least a supercritical atmospheric gas stream (the second predetermined pressure being about the critical pressure of the first cooled stream), a second regenerator configured to cool the supercritical atmospheric gas stream to form at least a second cooled stream, a pressure reducing device configured for expanding the second cooled stream to form at least a liquefied atmospheric gas stream, a storage container configured for selectively storing the liquefied atmospheric gas stream as a stored liquefied atmospheric gas, a pump configured for pressurizing the stored liquefied atmospheric gas to above a third predetermined pressure to form at least a pressurized liquefied atmospheric gas stream (the third predetermined pressure being about the critical pressure of the stored liquefied atmospheric gas), and an expander configured for expanding a heated stream to form at least a medium pressure atmospheric gas stream (the heat stream being formed by heating of the second regenerator). The second regenerator is configured to heat the pressurized liquefied atmospheric gas stream to form at least the heated stream and the first regenerator is configured for heating the pressurized atmospheric gas stream.

Another aspect of the present disclosure includes a regeneration process. The process includes pressurizing an atmospheric gas stream to above a predetermined pressure to form at least a compressed atmospheric gas stream (the predetermined pressure being about 2 bara), directing the compressed atmospheric gas stream to a first regenerator for cooling to form at least a first cooled stream, directing the first cooled stream from the first regenerator, further cooling the first cooled stream directed from the first regenerator by an aftercooler to form a further cooled stream, pressurizing the first cooled stream after it is further cooled to above a second predetermined pressure to form at least a supercritical atmospheric gas stream, the second predetermined pressure being about the critical pressure of the first cooled stream, directing the supercritical atmospheric gas stream to a second regenerator to form at least a second cooled stream, directing the second cooled stream from the second regenerator, reducing the pressure of the second cooled stream to form at least a liquefied atmospheric gas stream, selectively storing the liquefied atmospheric gas stream as a stored liquefied atmospheric gas, pressurizing at least a portion of the stored liquefied atmospheric gas to above a third predetermined pressure to form at least a pressurized liquefied atmospheric gas stream (the third predetermined pressure being about the critical pressure of the stored liquefied atmospheric gas), heating the pressurized liquefied atmospheric gas stream in the second regenerator to form at least a heated stream, directing the heated stream from the second regenerator, expanding the heated stream to form at least a medium pressure atmospheric gas stream, directing the medium pressure atmospheric gas stream to the first regenerator, heating the medium pressure atmospheric gas stream in the first regenerator, further heating at least a portion of the medium pressure atmospheric gas by an external heat source, expanding the heated medium pressure atmospheric gas to a fourth predetermined pressure to form an expanded atmospheric gas, the fourth predetermined pressure being about the atmospheric pressure of the environment, and directing the expanded atmospheric gas to a gas turbine compressor.

An advantage of the present disclosure includes greater efficiency of heating and cooling operations in systems for cooling and storing atmospheric gas and related systems.

Another advantage of the present disclosure includes the use of the liquid air energy storage system regardless of whether there is an external source of heat.

Another advantage of the present disclosure includes the use of the lower cost compressors, specifically, the so-called "adiabatic compressors," or compressors with no intercoolers for compression of air or other atmospheric gases.

Other features and advantages of the present invention will be apparent from the following more detailed description of the preferred embodiment, taken in conjunction with the accompanying drawings which illustrate, by way of example, the principles of the invention.

### BRIEF DESCRIPTION OF THE DRAWINGS

FIG. 1 shows a schematic diagram of a portion of an exemplary embodiment of a regeneration system having a first regenerator and a second regenerator according to the disclosure.

FIG. 2 shows a schematic diagram of a portion of an exemplary embodiment of a regeneration system having a first regenerator, a second regenerator, and an indirect regenerator according to the disclosure.

FIG. 3 shows a schematic diagram of a portion of an exemplary embodiment of a regeneration system having a first regenerator and a second regenerator according to the disclosure.

FIG. 4 shows a schematic diagram of a portion of an exemplary embodiment of a regeneration system having a first regenerator and a second regenerator according to the disclosure.

FIG. 5 shows a schematic diagram of a portion of an exemplary embodiment of a regeneration system having a first regenerator, a second regenerator, and an indirect regenerator according to the disclosure.

### DETAILED DESCRIPTION OF THE INVENTION

Provided is a method and system for cooling and storing an atmospheric gas during a first operational period of a process cycle and heating the atmospheric gas during a second operational period. The system and process involve multiple regenerators in a regeneration cycle for the atmospheric gas.

As used herein, the term "atmospheric gas" refers to a gas that primarily contains nitrogen, argon, oxygen, or combinations thereof. In one embodiment, the atmospheric gas is a mixture of nitrogen, argon, and oxygen. In one embodiment, the oxygen content can be above about 20.95% by volume. In one embodiment, the argon content can be above about 0.93% by volume. As used herein, the term "regenerator" refers to a fixed body with flow features and a heat capacity operated as a periodic heat transfer device providing cooling when operated in a first operational mode and providing heating in a second operational mode, or *vice versa.*

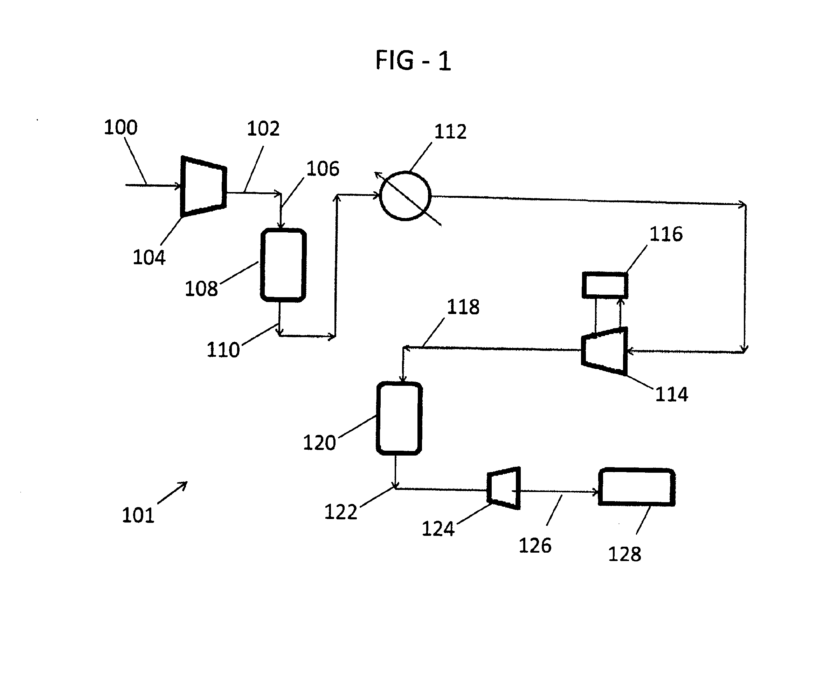

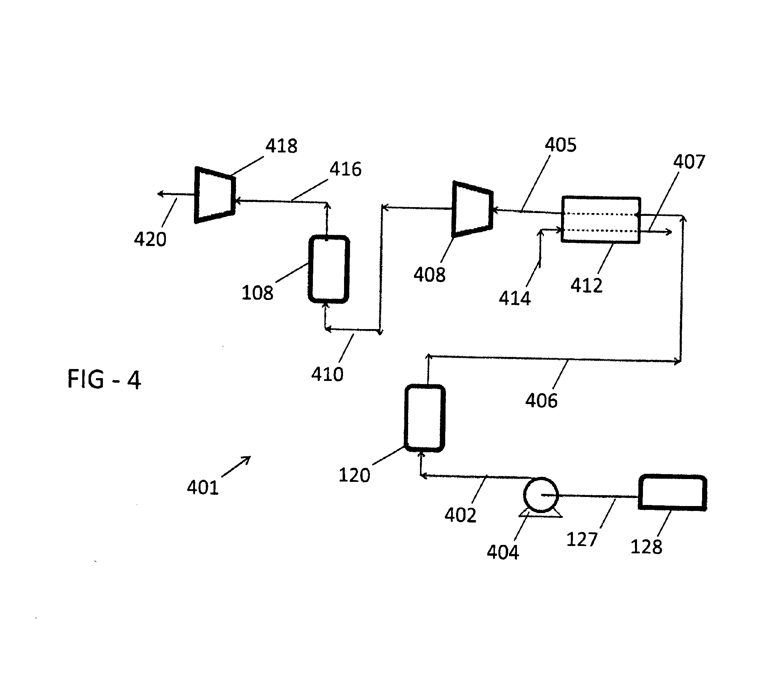

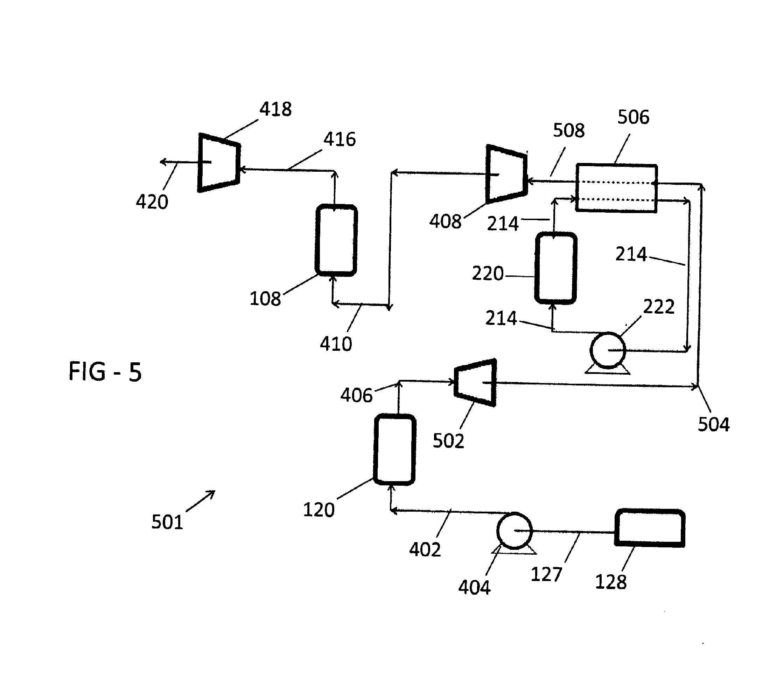

In general, a stream flows through the flow features (for example, flow channels) of a regenerator in a first direction during a first operational period (for example, an off-peak demand period when the price of electricity is generally lower) and during the first operational mode (see FIGS. 1, 2, and 3). In the first operational mode, the regenerator absorbs heat from at least a portion of the stream directed into the regenerator. This absorption of heat by the regenerator cools the stream to below a predetermined temperature to form a stream that is directed from the regenerator. During a second operational period (for example, an on-peak demand period when the price of electricity is generally higher), the same regenerator can be operated in a second operational mode (see FIGS. 4 and 5). In the second operational mode, a pressurized liquefied atmospheric gas stream is directed through the regenerator that provides heat to the pressurized liquefied atmospheric gas stream. The first operational period and the second operational period can repeat multiple times as cycles and the cycles can be repeatedly performed. The first operational period can be during periods of lower energy demand from the grid and the second operational period can be during periods of higher energy demand from the grid.

A regenerator can be arranged in series with one or more additional regenerators and/or the regenerator can be arranged in parallel with one or more additional regenerators. In one embodiment, the arrangement can reduce longitudinal heat transfer (longitudinal heat transfer being the heat transfer in the direction of flow) by connecting multiple regenerator beds in series. In including a plurality of regenerator beds, it is desirable that different regenerators are configured for different values of predetermined parameters (for example, pressure ranges, temperature ranges, and/or flow ranges). As is defined herein, a regenerator may have several regenerator beds in series, or in parallel, or a combination of beds in series and in parallel. However, if a fluid inlet or outlet, or both a fluid inlet and outlet, exists in between the generator beds in a regenerator bed series, these regenerator beds are no longer considered as a single regenerator, but are considered at least as parts of at least two regenerators.

FIG. 1 shows a schematic diagram of a portion of a regeneration system 101. Specifically, FIG. 1 shows the portion of the regeneration system 101 used during the first operational period (for example, an off-peak demand period). In one embodiment of the regeneration method, an atmospheric gas stream 100 is pressurized to above a predetermined pressure to form a compressed atmospheric gas stream 102. The atmospheric gas stream 100 can be pressurized by a compressor 104 (for example, an adiabatic compressor or an air compressor). Use of the adiabatic compressor can pressurize streams to a higher pressure without an intercooler thereby augmenting benefits of including multiple regenerators (the benefits can be due to a compressor with intercoolers being more expensive than an adiabatic compressor and the heat of compression not being able to be used while the use of the regenerator captures most of the heat in the compressed air, and due to the fact that such a system can be used at locations with no external heat input). In one embodiment where the compressor 104 is an adiabatic compressor, the compressor 104 can be devoid of intercoolers. In an alternate embodiment where the compressor 104 is an air compressor, the atmospheric gas stream 100 (for example, an air stream) is directed through the air compressor. In this embodiment, impurities (for example, water vapor, carbon dioxide, and/or other impurities) are removed by an atmospheric gas purifier (for example, an air purifier). In one embodiment, the atmospheric gas stream 100 is pressurized by the compressor 104 to above a predetermined pressure. The predetermined pressure can be about 2 bara.

The compressed atmospheric gas stream 102 can form one or more streams that are directed from the compressor 104. A stream 106 of the one or more streams is directed to a low pressure regenerator 108 for cooling to form a first cooled stream 110.

In one embodiment, the low pressure regenerator 108 can be configured for operation within a predetermined pressure range (for example, between about 150 psia and about 250 psia, between about 175 psia and about 225 psia, or between about 190 psia and about 210 psia). In another embodiment, the low pressure regenerator 108 can be configured for operation at about a predetermined pressure (for example, about 200 psia, about 201.6 psia, or about 197.6 psia).

The first cooled stream 110 is directed from the low pressure regenerator 108. Additionally or alternatively, the first cooled stream 110 can be further cooled by cooling water or another coolant. In one embodiment, the first cooled stream 110 is further cooled by a water-cooled aftercooler 112 or an ambient-air-cooled aftercooler.

The first cooled stream 110 is further pressurized in a compressor 114. In one embodiment, the compressor 114 includes intercoolers 116. In another embodiment, the compressor 114 is devoid of intercoolers 116. The compressor 114 can be configured to pressurize the first cooled stream 110 to a predetermined pressure. For example, the compressor 114 can be configured to pressurize the first cooled stream 110 to the critical pressure of air, the critical pressure of nitrogen, the critical pressure of the first cooled stream 110, or any other suitable pressure. Pressurizing the first cooled stream 110 forms a supercritical atmospheric gas (forming supercritical atmospheric gas stream 118).

The supercritical atmospheric gas stream 118 is directed to a high pressure regenerator 120. In one embodiment, the high pressure regenerator 120 can be configured for operation within a predetermined pressure range (for example, between about 800 psia and about 1300 psia, between about 1225 psia and about 1275 psia, or between about 1240 psia and about 1260 psia). In another embodiment, the high pressure regenerator 120 can be configured for operation at about a predetermined pressure (for example, about 1250 psia, about 1248 psia, or about 1243 psia).

The second cooled stream 122 is directed from the high pressure regenerator 120 to an expander 124 (for example, a dense fluid expander, or an expansion valve). The expander 124 expands the second cooled stream 122 to a lower pressure to form a liquefied atmospheric gas stream 126. As used herein, the term "liquefied" describes at least a substantial portion of the atmospheric gas stream being in a liquid phase. The liquefied atmospheric gas stream 126 is then stored in a storage container 128 (for example, a liquid air storage container or a liquid nitrogen storage container) until it is released during peak hours (as described below with reference to FIGS. 4 and 5).

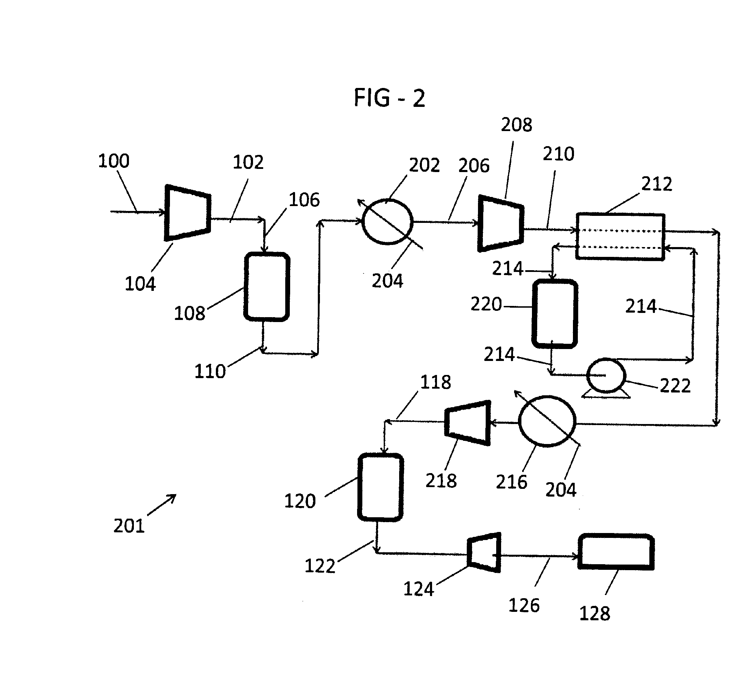

FIG. 2 shows a schematic diagram of a portion of a regeneration system 201. Specifically, FIG. 2 shows the portion of the regeneration system 201 used during the first operational period (for example, an off-peak demand period). Similar to the embodiment shown in FIG. 1, the atmospheric gas stream 100 (for example, air) is pressurized by the compressor 104 with no intercoolers (also known as an adiabatic compressor) to above a predetermined pressure (for example, 2 bara) to form the compressed atmospheric gas stream 102. Stream 106 is directed from the compressor 104 to the low pressure regenerator 108 for cooling to form the first cooled stream 110.

The first cooled stream 110 is directed from the low pressure regenerator 108 and is further cooled by an indirect heat exchanger 202 with a cooling water stream 204 to form a cooled and compressed stream 206. The cooled and compressed stream 206 is directed to a medium pressure compressor 208 to form a pressurized stream 210. The pressurized stream 210 is directed to an indirect heat exchanger 212 where it is further cooled by a heat transfer fluid 214, is directed to a heat exchanger 216 where it is even further cooled, and then is directed to a high pressure compressor 218.

The heat transfer fluid 214 can be provided in conjunction with an indirect regenerator 220. As used herein, the term "indirect" describes a regenerator that is separate from the flow of atmospheric gas but provides cooling or heating to the atmospheric gas or other suitable stream in the system. In one embodiment, the heat transfer fluid 214 is heated through the process of cooling the pressurized stream 210. Upon being heated, the heat transfer fluid 214 is directed to the indirect regenerator 220 that cools the heat transfer fluid 214. The heat transfer fluid 214 is then pumped back to the indirect heat exchanger 216 by a pump 222 to cool the pressurized stream 210. Such a system allows the regenerator to work at a lower pressure than the atmospheric gas being heated and cooled.

Upon the pressurized stream 210 being cooled and directed to the high pressure compressor 218, the high pressure compressor 218 further pressurizes the pressurized stream 210 to the critical pressure to form the supercritical atmospheric gas stream 118. Similar to the embodiments described above with reference to FIG. 1, the supercritical atmospheric gas stream 118 is directed to the high pressure regenerator 120 and cooled to a cryogenic level, the second cooled stream 122 is directed from the high pressure regenerator 120 to an expander 124 (for example, a dense fluid expander or an expansion valve), the expander 124 expands the second cooled stream 122 to a lower pressure to form a liquefied atmospheric gas stream 126, and the liquefied atmospheric gas stream 126 is stored in the storage container 128.

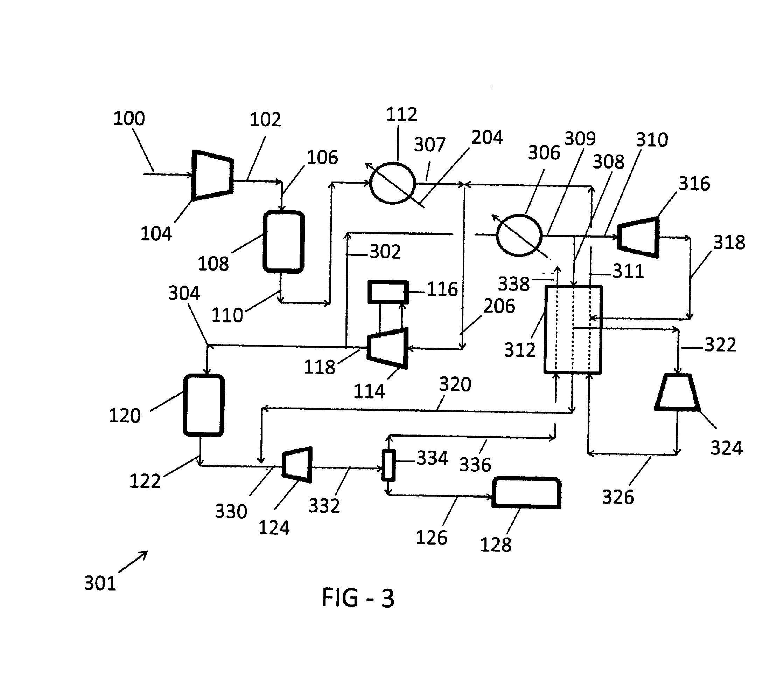

FIG. 3 shows a schematic diagram of a portion of a regeneration system 301. Specifically, FIG. 3 shows the portion of the regeneration system 301 used during the first operational period (for example, an off-peak demand period). Similar to the embodiment shown in FIGS. 1 and 2, the atmospheric gas stream 100 is pressurized by the compressor 104 (for example, an adiabatic air compressor) to above a predetermined pressure (for example, 2 bara) to form the compressed atmospheric gas stream 102 that forms the stream 106. Stream 106 is directed from the compressor 104 to the low pressure regenerator 108 for cooling to form the first cooled stream 110. The first cooled stream 110 is then directed from the low pressure regenerator 108 and is further cooled by the water-cooled aftercooler 112 with a cooling water stream 204. The cooled and compressed stream 206 (which differs from the embodiments in FIGS. 1 and 2 by being formed by combining a stream 307 from the water-cooled aftercooler 112 and a combined stream 311 described below) is further pressurized in the compressor 114 (which typically includes intercoolers 116), and the compressor 114 is configured to pressurize the first cooled stream 110 to a predetermined pressure (for example, the critical pressure of the gas) to form the supercritical atmospheric gas stream 118.

In addition to some or all of the features shown in FIGS. 1 and 2, FIG. 3 shows regeneration system 301 including a split of the supercritical atmospheric gas 118 into a first high pressure stream 302 and a second high pressure stream 304. The first high pressure stream 302 is directed through an aftercooler 306 for cooling (see stream 309) and then is split into a first cooled high pressure stream 308 and a second cooled high pressure stream 310. The second cooled high pressure stream 310 is directed to a warm expander 316 where it is expanded to a predetermined pressure (for example, the pressure of the first cooled stream 110), generates work, and forms a lower temperature stream 318. The lower temperature stream 318 is directed to the supplemental heat exchanger 312 where it is cooled. Within the supplemental heat exchanger 312, the first cooled high pressure stream 308 is split into a first stream 320 and a second stream 322. The first stream 320 is cooled to a cryogenic temperature and is directed from the supplemental heat exchanger 312. The second stream 322 is directed from the supplemental heat exchanger 312 to a cold expander 324 where the second stream 322 is expanded, generates work, and forms a cryogenic stream 326. The cryogenic stream 326 is directed into the supplemental heat exchanger 312, is heated, and is combined with the lower temperature air stream 318 that is further heated in the supplemental heat exchanger 312 to form a combined stream 311. The combined stream 311 is close to about the temperature of the atmospheric gas stream 100 or about ambient temperature and is directed to combine with the first cooled stream 110 (after the first cooled stream 110 is cooled by the water-cooled aftercooler 112) to form the cooled and compressed stream 206.

Upon being directed from the supplemental heat exchanger 312, the first stream 320 (at the cryogenic temperature) is combined with the second cooled stream 122 to form a combined cryogenic stream 330. The combined cryogenic stream 330 is directed to the expander 124 that expands the combined cryogenic stream 330 to form a lower pressure stream 332 that is directed to a phase separator 334 that directs the liquefied atmospheric gas stream 126 to the storage container 128 (to be stored until being released during peak hours) and directs a vapor atmospheric gas stream 336 to the supplemental heat exchanger 312 where the vapor atmospheric gas stream 336 is heated to about the temperature of the atmospheric gas stream 100 or about ambient temperature and forms an exhaust stream 338 that can be vented, used for other processes, or used within the regeneration system 301, such as for regeneration of the atmospheric gas cleaner, typically an adsorption unit (not shown).

FIG. 4 shows a schematic diagram of a portion of a regeneration system 401. Specifically, FIG. 4 shows the portion of the regeneration system 401 used during the second operational period (for example, an on-peak demand period). The regeneration system 401 shown in FIG. 4 can be used in conjunction with the regeneration system 101 shown in FIG. 1 and/or the regeneration system 301 shown in FIG. 3.

The regeneration system 401 selectively directs the liquefied atmospheric gas stream 127 from the storage container 128 during the second operational period. The second operational period can be initiated based upon any suitable identifiable event. For example, the second operational period can be based upon patterns of high electricity usage in a region (for example, time of day, day of week, etc.), patterns of high electricity usage at a facility including the regeneration system 401 (for example, while other processes are being used, while shifts are working, etc.), an event such as a brown-out or black-out, and/or an individual or organization initiating a reduction of power consumption (for example, a power transmission organization requesting a reduction of power consumption in exchange for a financial incentive).

The liquefied atmospheric gas stream 127 is directed from the storage container 128 by pressurizing at least a portion of the stored liquefied atmospheric gas at a predetermined pressure thereby forming a pressurized liquefied atmospheric gas stream 402. For example, the regeneration system 401 can include a pump 404 for directing the pressurized liquefied atmospheric gas stream 402. The pump 404 can be configured for high pressure or supercritical pressure. The pressurized liquefied atmospheric gas stream 402 is directed to the high pressure regenerator 120. This regenerator is the same as that in FIG. 1 except that the flow direction of the fluid going through the regenerator is reversed, and heat is provided to the fluid from the regenerator instead of the fluid (the supercritical atmospheric gas stream 118) providing heat to the regenerator). In the high pressure regenerator 120, at least a portion of the pressurized liquefied atmospheric gas stream 402 is heated to a predetermined temperature to form a heated stream 406. The predetermined temperature can be about the temperature of the atmospheric gas stream 100 or ambient temperature. In one embodiment, the heated stream 406 can be further heated in a gas heat exchanger 412 to form stream 405. Heat in the gas heat exchanger 412 can be provided by any suitable source. For example, heat in the gas heat exchanger 412 can be provided by exhaust stream 414 from a gas turbine (not shown) to form a cooled stream 407. The heated stream 406 is directed from the high pressure regenerator 120 and toward an expander 408. The expander 408 reduces the heated stream 406 to a predetermined pressure to form a medium pressure atmospheric gas stream 410. In one embodiment, the medium pressure atmospheric gas stream 410 can be used to regenerate an adsorption bed (not shown) at a higher temperature and/or lower pressure. The adsorption bed can reduce or eliminate freezing of certain parts of the regeneration system 401 and/or downstream equipment.

The medium pressure atmospheric gas stream 410 is directed to the low pressure regenerator 108 and is heated to form a heated medium pressure atmospheric gas stream 416. The heated medium pressure atmospheric gas stream 416 is directed to an expander 418, expanded, and forms an atmospheric gas exhaust stream 420. The atmospheric gas exhaust stream 420 can be used for any suitable purpose. For example, the atmospheric gas exhaust stream 420 can be used for drying, can be vented into the atmosphere, and/or can be used in other processes.

FIG. 5 shows a schematic diagram of a portion of a regeneration system 501. Specifically, FIG. 5 shows the portion of the regeneration system 501 used during the second operational period (for example, an on-peak demand period). The regeneration system 501 shown in FIG. 5 can be used in conjunction with the regeneration system 201 shown in FIG. 2.

Similar to the regeneration system 401 of FIG. 4, the regeneration system 501 of FIG. 5 selectively directs the liquefied atmospheric gas stream 127 from the storage container 128 during the second operational period. The liquefied atmospheric gas stream 127 is directed from the storage container 128 by pressurizing at least a portion of the stored liquefied atmospheric gas stream 127 at a predetermined pressure thereby forming the pressurized liquefied atmospheric gas stream 402 (for example, by using a pump 404). The pressurized liquefied atmospheric gas stream 402 is directed to the high pressure regenerator 120. In the high pressure regenerator 120, at least a portion of the pressurized liquefied atmospheric gas stream 402 is heated to a predetermined temperature to form the heated stream 406.

In regeneration system 501, the heated stream 406 is expanded in a high pressure expander 502 to form an expanded stream 504. The expanded stream 504 is directed to an indirect heat exchanger 506. In regeneration system 501, the indirect heat exchanger 506 heats the expanded stream 504 to form a further heated stream 508 that is then directed to the expander 408 (for example, a medium pressure expander). The indirect heat exchanger 506 heats the expanded stream 504 by transferring heat from the heat transfer fluid 214 provided in conjunction with the indirect regenerator 220. The heat transfer fluid 214 is then pumped back to the indirect regenerator 220 by a pump 222 to re-heat the heat transfer fluid 214.

The further heated stream 508 directed to the expander 408 is expanded to a predetermined pressure to form a medium pressure atmospheric gas stream 410. The medium pressure atmospheric gas stream 410 is directed to the low pressure regenerator 108 and is heated to form a heated medium pressure atmospheric gas stream 416. The heated medium pressure atmospheric gas stream 416 is directed to an expander 418, expanded, and forms an atmospheric gas exhaust stream 420. The atmospheric gas exhaust stream 420 can be used for any suitable purpose. For example, the atmospheric gas exhaust stream 420 can be used for cooling a data center, can be vented into the atmosphere, and/or can be used in other processes.

In an exemplary embodiment, the portion of the regeneration system 301 shown in FIG. 3 is operated in conjunction with the portion of the regeneration system 401 shown in FIG. 4. Referring to FIG. 3, the compressor 104 can be an adiabatic compressor configured for shaft work of about 43,511 HP with about 81.73% isentropic efficiency and about 97% mechanical efficiency. The compressor 114 can be an isothermal compressor configured for shaft work of about 26,588 HP with about 82% isentropic efficiency and about 97% mechanical efficiency. The isothermal compressor can include four stages and can be cooled by the intercoolers 116 to about 70°F (21°C). The warm expander 316 can be configured for shaft work of about -608 HP with about 85% isentropic efficiency and 97% mechanical efficiency. The cold expander 324 can be configured for shaft work of about -409 HP with about 85% isentropic efficiency and 97% mechanical efficiency. The expander 124 can be a dense fluid expander configured for shaft work of about -630 with about 60% isentropic efficiency and 96% mechanical efficiency. Referring to FIG. 4, the pump 404 for directing the pressurized liquefied atmospheric gas stream 402 can be configured for shaft work of about 1,350 HP with about 75% isentropic efficiency. The expander 408 can be a higher pressure expander configured for shaft work of about -34,617 HP with 85% isentropic efficiency and 97% mechanical efficiency. The expander 418 can be a medium pressure expander configured for shaft work of about -24,525 with about 85% isentropic efficiency and about 97% mechanical efficiency.

In this exemplary embodiment (having the regeneration system 301 of FIG. 3 and the regeneration system 401 of FIG. 4), the exhaust stream 414 directed to the gas heat exchanger 412 shown in FIG. 4 is directed from a gas turbine (not shown) operated in conjunction with the compressor 114 shown in FIG. 5 (the isothermal compressor having four stages cooled by the intercoolers 116). In this embodiment, the composition of the exhaust stream 414 can be (in moles) 0.74418 N₂, 0.00896 Ar, 0.13720 O₂, 0.03151 CO₂, and 0.078148 H₂O (vapor). The streams within this embodiment can have the following temperature (T), pressure (P), and flow rate (F):

**Table 1**

| Stream # | T(°F) | P (psia) | F (Ibmol/hr) |
|---|---|---|---|
| 100 | 60 | 14.69 | 22,744 |
| 102 | 750 | 201.6 | 22,744 |
| 110 | 369 | 197.6 | 22,744 |
| 118 | 163 | 1,248 | 25,866 |
| 122 | -307 | 1,243 | 21,469 |
| 126 | -315.5 | 17 | 22,744 |
| 126 | -316 | 17 | 21,550 |
| 206 | 67 | 196.5 | 25,866 |
| 302 | 163 | 1,248 | 4,397 |
| 304 | 163 | 1,248 | 21,469 |
| 307 | 70 | 196.6 | 25,866 |
| 308 | 70 | 1,247 | 3,077 |
| 309 | 70 | 1,247 | 4,397 |
| 310 | 70 | 1,247 | 1,319 |
| 311 | 41 | 196.5 | 1,803 |
| 318 | -126 | 198 | 1,319 |
| 320 | -281 | 1,244 | 1,275 |
| 322 | -120 | 1,246 | 1,803 |
| 326 | -254 | 198 | 1,803 |
| 332 | -306 | 30 | 22,744 |
| 336 | -315.5 | 17 | 1,193.5 |
| 338 | 41.2 | 14.7 | 1,193.5 |
| 402 | -309 | 1,220 | 21,550 |
| 405 | 900 | 1,213 | 21,550 |
| 406 | 157 | 2,215 | 21,550 |
| 407 | 253 | 12.4 | 23,393 |
| 410 | 326 | 100 | 21,550 |
| 414 | 939 | 15 | 23,393 |
| 416 | 745 | 96 | 21,550 |
| 420 | 331 | 14.7 | 21,550 |

The flow conditions, work inputs, and/or work outputs are based upon the same flow duration of the first operational period (off-peak operation) and the second operational period (on-peak operation). In other embodiments, the duration of the first operational period and the duration of the second operational period differ. For example, the first operational period (off-peak operation) can be 10 hours while the second operational period (on-peak operation) can be 6 hours. In this embodiment, a flow amount of one or more of the streams and an amount of work by the expanders during the first operational period can be adjusted. The adjustment can include reducing the flow amounts of the streams during the first operational period by multiplying by a factor of 0.6 and reducing the amount of work of the compressor by multiplying by the same factor.

In further embodiments, certain components of the regeneration system can be substituted or removed. For example, embodiments having only two regenerators can be devoid of a medium pressure compressor, an expander, an indirect heat exchanger, an indirect regenerator, and/or a heat transfer fluid cycle including a pump. Alternatively, in one embodiment, a medium pressure compressor and expander can be included in the regeneration system but a regenerator can be substituted for an indirect heat exchanger. In this embodiment, the regeneration system can be devoid of a heat transfer fluid cycle including a pump.

Including adiabatic compressors can also result in benefits of having multiple regenerators being augmented. In one embodiment, the amount of available external heat is considered in selecting the amount of adiabatic compressors and isothermal compressors included in the regeneration system.

In one embodiment, one or more expanders within the regeneration system are coupled to one or more compressors. Such coupling can eliminate a generator, a motor, and/or losses associated with the generator and/or the motor.

In one embodiment having a small plant capacity (for example, when the expander work is less htan about 50 kW), a dense fluid expander (which has a higher price and higher efficiency) is replaced with a throttle valve (which has a lower price and lower efficiency) to reduce capital cost. In a further embodiment, the capacity of the plant can be analyzed to determine whether a dense fluid expander or throttle valve is included in the regeneration system.

In one embodiment, additional or alternative cooling is provided to one or more regenerators from a non-combustible source. In one embodiment where refrigeration is supplemented to the regeneration system by external refrigeration, the external refrigeration permits cooling below the critical temperature thereby extending the operational duration of the regeneration system. For example, including the external refrigeration can extend operational sustainability by months or years. Introducing liquid nitrogen, liquid air, and/or adding a cryogenic refrigerator into the process can provide such external refrigeration. In one embodiment, a portion or all of the cooling in the regeneration system is performed using non-combustible materials. For example, fluids used in cooling of the refrigeration system are all non-combustible. As used herein, the term "non-combustible fluid" typically includes air, argon, nitrogen, oxygen, helium, xenon, certain fluorinated hydrocarbons, and combinations thereof.

While the invention has been described with reference to a preferred embodiment, it will be understood by those skilled in the art that various changes may be made and equivalents may be substituted for elements thereof without departing from the scope of the invention. In addition, many modifications may be made to adapt a particular situation or material to the teachings of the invention without departing from the essential scope thereof. Therefore, it is intended that the invention not be limited to the particular embodiment disclosed as the best mode contemplated for carrying out this invention, but that the invention will include all embodiments falling within the scope of the appended claims.

## Claims

1. A regeneration process for periodic cooling, storing, and heating, the process comprising:
pressurizing an atmospheric gas stream to above a predetermined pressure to form at least a compressed atmospheric gas stream, the predetermined pressure being about 2 bara;
directing the compressed atmospheric gas stream to a first regenerator for cooling to form at least a first cooled stream;
directing the first cooled stream from the first regenerator;
pressurizing the first cooled stream to above a second predetermined pressure to form at least a supercritical atmospheric gas stream, the second predetermined pressure being about the critical pressure of the first cooled stream;
directing the supercritical atmospheric gas stream to a second regenerator to form at least a second cooled stream;
directing the second cooled stream from the second regenerator;
reducing the pressure of the second cooled stream to form at least a liquefied atmospheric gas stream;
selectively storing the liquefied atmospheric gas stream as a stored liquefied atmospheric gas;
pressurizing at least a portion of the stored liquefied atmospheric gas to above a third predetermined pressure to form at least a pressurized liquefied atmospheric gas stream, the third predetermined pressure being about the critical pressure of the stored liquefied atmospheric gas;
heating the pressurized liquefied atmospheric gas stream in the second regenerator to form at least a heated stream;
directing the heated stream from the second regenerator;
expanding the heated stream to form at least a medium pressure atmospheric gas stream;
directing the medium pressure atmospheric gas stream to the first regenerator; and
heating the medium pressure atmospheric gas stream in the first regenerator.

2. The process of claim 1, wherein the pressurizing of the atmospheric gas stream is performed by a compressor having no intercoolers.

3. The process of claims 1 or 2, wherein the pressurizing of the first cooled stream is performed by a compressor having no intercoolers.

4. The process of any of the preceding claims, further comprising further cooling the first cooled stream directed from the first regenerator by an aftercooler.

5. The process of any of the preceding claims, further comprising further heating at least a portion of the pressurized atmospheric gas by an external heat source.

6. The process of claim 5, wherein the external heat source is exhaust gas from a gas turbine, and/or is a solar heat collector.

7. The process of any of the preceding claims, wherein the atmospheric gas is air, or is nitrogen.

8. The process of any of the preceding claims, further comprising directing the heated pressurized atmospheric gas or the heated medium pressure stream to a gas turbine.

9. The process of any of the preceding claims, further comprising expanding the heated pressurized atmospheric gas or the heated medium pressure stream to a fourth predetermined pressure to form an expanded atmospheric gas, the fourth predetermined pressure being about the atmospheric pressure of the environment.

10. The process of claim 9, further comprising directing the expanded atmospheric gas to a gas turbine.

11. The process of any of the preceding claims, wherein the second cooled stream is formed in the second regenerator by external cooling provided by a non-combustible fluid.

12. The process of any of the preceding claims, further comprising providing additional heating or cooling to the system with an indirect regenerator.

13. A system for performing the process of any of the preceding claims.

14. A regeneration system for periodic cooling, storing, and heating, the process comprising:
a first compressor for pressurizing an atmospheric gas stream to above a predetermined pressure to form at least a compressed atmospheric gas stream, the predetermined pressure being about 2 bara;
a first regenerator configured for cooling the compressed atmospheric gas stream to form at least a first cooled stream;
a second compressor configured for pressurizing the first cooled stream to above a second predetermined pressure to form at least a supercritical atmospheric gas stream, the second predetermined pressure being about the critical pressure of the first cooled stream;
a second regenerator configured to cool the supercritical atmospheric gas stream to form at least a second cooled stream;
a pressure reducing device configured for expanding the second cooled stream to form at least a liquefied atmospheric gas stream;
a storage container configured for selectively storing the liquefied atmospheric gas stream as a stored liquefied atmospheric gas;
a pump configured for pressurizing the stored liquefied atmospheric gas to above a third predetermined pressure to form at least a pressurized liquefied atmospheric gas stream, the third predetermined pressure being about the critical pressure of the stored liquefied atmospheric gas; and
an expander configured for expanding a heated stream to form at least a medium pressure atmospheric gas stream, the heat stream being formed by heating of the second regenerator;
wherein the second regenerator is configured to heat the pressurized liquefied atmospheric gas stream to form at least the heated stream;
wherein the first regenerator is configured for heating the medium pressure atmospheric gas stream.

15. The system of claim 14, further comprising an indirect regenerator, the indirect regenerator being configured to provide additional heating or cooling to the system.

16. The system of claims 14 or 15, further comprising a gas turbine, the gas turbine positioned to heat at least a portion of the heated pressurized atmospheric gas or the medium pressure atmospheric gas.

17. The system of any of claims 14 to 16, further comprising a solar heat collector, the solar heat collector positioned to heat at least a portion of the heated pressurized atmospheric gas or the medium pressure atmospheric gas.

18. A regeneration process for periodic cooling, storing, and heating, the process comprising:
pressurizing an atmospheric gas stream to above a predetermined pressure to form at least a compressed atmospheric gas stream, the predetermined pressure being about 2 bara;
directing the compressed atmospheric gas stream to a first regenerator for cooling to form at least a first cooled stream;
directing the first cooled stream from the first regenerator;
further cooling the first cooled stream directed from the first regenerator by an aftercooler to form a further cooled stream;
pressurizing the further cooled stream from the aftercooler to above a second predetermined pressure to form at least a supercritical atmospheric gas stream, the second predetermined pressure being about the critical pressure of the first cooled stream;
directing the supercritical atmospheric gas stream to a second regenerator to form at least a second cooled stream;
directing the second cooled stream from the second regenerator;
reducing the pressure of the second cooled stream to form at least a liquefied atmospheric gas stream;
selectively storing the liquefied atmospheric gas stream as a stored liquefied atmospheric gas;
pressurizing at least a portion of the stored liquefied atmospheric gas to above a third predetermined pressure to form at least a pressurized liquefied atmospheric gas stream, the third predetermined pressure being about the critical pressure of the stored liquefied atmospheric gas;
heating the pressurized liquefied atmospheric gas stream in the second regenerator to form at least a heated stream;
directing the heated stream from the second regenerator;
expanding the heated stream to form at least a medium pressure atmospheric gas stream;
directing the medium pressure atmospheric gas stream to the first regenerator;
heating the medium pressure atmospheric gas stream in the first regenerator;
further heating at least a portion of the medium pressure atmospheric gas by an external heat source;
expanding the heated medium pressure atmospheric gas to a fourth predetermined pressure to form an expanded atmospheric gas, the fourth predetermined pressure being about the atmospheric pressure of the environment; and
directing the expanded atmospheric gas to a gas turbine.
